# EUROPÄISCHE PATENTANMELDUNG

(11) **EP 0 920 949 A2**
(43) Veröffentlichungstag der Anmeldung: **09.06.1999**
(21) Anmeldenummer: 98121671.6
(22) Anmeldetag: 13.11.1998
(51) Int. Cl.: B23Q 1/26, B23Q 37/00

(54) **(Verpackungs-)Maschine mit Schraubverbindungen**

(30) Priorität: 05.12.1997 DE 19754075
(71) Anmelder: Focke & Co. (GmbH & Co.), 27283 Verden (DE)
(72) Erfinder: Focke, Heinz, 27283 Verden (DE)
(74) Vertreter: Bolte, Erich, Dipl.-Ing.

(57) **Zusammenfassung**

(Verpackungs-)Maschine mit Schraubverbindungen für die Befestigung, Verstellbarkeit von Maschinenelementen, Baugruppen, Aggregaten etc.

Um bei Maschinen bzw. Maschinenteilen, beispielsweise einem Banderolenapparat einer Verpackungsmaschine für Zigaretten, Fehlbetätigungen von Schrauben unterschiedlicher Funktion zu vermeiden, sind diese entsprechend der Funktion unterschiedlich gestaltet, insbesondere im Bereich von Schraubenköpfen. So können Befestigungsschrauben (39) für ein Gehäuse (37) mit Spezialköpfen ausgerüstet sein, insbesondere mit Vielzahnköpfen, die ein besonderes Betätigungswerkzeug erfordern. Andere Schrauben sind als Sechskant- bzw. als Sechskant-Innenschrauben ausgebildet oder als Rändelschrauben zur unmittelbaren manuellen Betätigung.

## Beschreibung

Die Erfindung betrifft eine Maschine, insbesondere Verpackungsmaschine, mit durch Schrauben befestigten, verstellbaren oder einstellbaren Maschinenelementen, Baugruppen, Aggregaten, Einheiten oder Organen.

Bei komplexen Maschinen, insbesondere Verpackungsmaschinen für die Zigarettenindustrie, ist eine Vielzahl von Maschinenteilen, Aggregaten, (Falt-)Organen etc. durch Schrauben befestigt und/oder einstellbar. Die Schrauben haben aufgrund ihrer Funktion eine unterschiedliche Bedeutung. Durch die Vielzahl der häufig in engem Zusammenhang positionierten Schrauben ist die Übersichtlichkeit bei der Bedienung bzw. Betätigung der Schrauben beeinträchtigt. Es besteht dadurch die Gefahr, daß für bestimmte Maßnahmen zu betätigende oder zu lösende Schrauben nicht unmittelbar entsprechend der funktionellen Zuordnung erkannt werden. Auch besteht die Gefahr, daß für bestimmte Vorgänge, zum Beispiel beim Justieren von Organen oder beim Lösen von Aggregaten, Einheiten oder Organen, aus Versehen zusätzlich Schrauben betätigt oder verstellt werden, die mit dem durchzuführenden Arbeitsschritt nicht in Zusammenhang stehen. Dadurch ergeben sich unter Umständen häufig aufwendige Nacharbeiten, insbesondere Justierungen.

Der Erfindung liegt die Aufgabe zugrunde, die Handhabung von Maschinen, vor allem von Verpackungsmaschinen, durch Bedienungspersonal sicherer zu gestalten bei der notwendigen Betätigung oder Bedienung von Schrauben.

Zur Lösung dieser Aufgabe ist die erfindungsgemäße (Verpackungs-)Maschine dadurch gekennzeichnet, daß Schrauben einer ersten Gruppe mit gleicher Funktion oder Wartungsstufe eine übereinstimmende Form aufweisen und Schrauben mindestens einer zweiten Gruppe mit abweichender Funktion oder Wartungsstufe ebenfalls eine übereinstimmende, jedoch andere Form aufweisen als die Schrauben der ersten Gruppe, insbesondere derart, daß die Schrauben der zweiten Gruppe nicht mit Betätigungsmitteln für Schrauben der ersten Gruppe betätigbar sind.

Die Erfindung trägt dem Umstand Rechnung, daß unterschiedliche Arbeiten an Maschinen vorwiegend von unterschiedlichen Bedienungspersonen ausgeführt werden. So ist es beispielsweise erforderlich, die Position von Arbeitsorganen, Halterungen für Verpackungsmaterial etc. in Verpackungsmaschinen von Zeit zu Zeit nachzustellen. Für die mechanische Justierung derartiger Organe sind entsprechende Stellschrauben vorgesehen. Andere Schrauben dienen als Verbindungsmittel für Organe, die regelmäßig zu Reinigungszwecken, zur Kontrolle oder auch zu Reparaturzwecken abgenommen und durch andere, gleichartige Organe ersetzt werden müssen. Derartige Befestigungs- oder Verbindungsschrauben werden üblicherweise von entsprechenden Spezialisten betätigt. Um Fehlbedienungen zu vermeiden, sind die Gruppen von hinsichtlich der Funktion unterschiedlichen Schrauben unterschiedlich gestaltet. So können beispielsweise Justierschrauben als von Hand zu bedienende Rändelschrauben ausgebildet sein, während Befestigungs- und Verbindungsschrauben einen Schraubenkopf aufweisen, der ein spezielles Betätigungswerkzeug erfordert.

Eine weitere Gruppe von (Verbindungs-)Schrauben dient zur Verbindung von Organen, die bei der Inbetriebnahme einer (Verpackungs-)Maschine und danach von Zeit zu Zeit entsprechend der Veränderung oder Abnutzung von Maschinenteilen nachgestellt werden müssen. Beispielsweise dienen diese Schrauben zur exakten Positionierung von Umlenkrädern für Zahnriemen. Solche Verbindungsschrauben mit Stellfunktion sind meistens von einer anderen Gruppe von Spezialisten zu betätigen und im Sinne der Erfindung in einer anderen Weise ausgestaltet und betätigbar als die vorgenannten Gruppen von Schrauben.

Die unterschiedliche Gestaltung der Schrauben entsprechend unterschiedlichen Funktionen innerhalb der (Verpackungs-)Maschine kann zusätzlich oder alternativ durch unterschiedliche Ausgestaltung des Gewindes gegeben sein. So können Schrauben zum Befestigen von (abnehmbaren) Aggregaten mit einem speziellen Gewinde versehen sein, zum Beispiel einem Feingewinde oder einem Trapezgewinde. Dadurch wird vermieden, daß beim (wiederholten) Montieren des betreffenden Aggregats falsche Schrauben eingesetzt werden.

Weitere Einzelheiten und Ausgestaltungen der Erfindung werden nachfolgend anhand von Ausführungsbeispielen näher erläutert, und zwar anhand von Einzelheiten einer Verpackungsmaschine für die Fertigung von Zigarettenpackungen. Es zeigt:
- Fig. 1: ein Aggregat einer Verpackungsmaschine für Zigaretten, nämlich einen Banderolenapparat, in Seitenansicht,

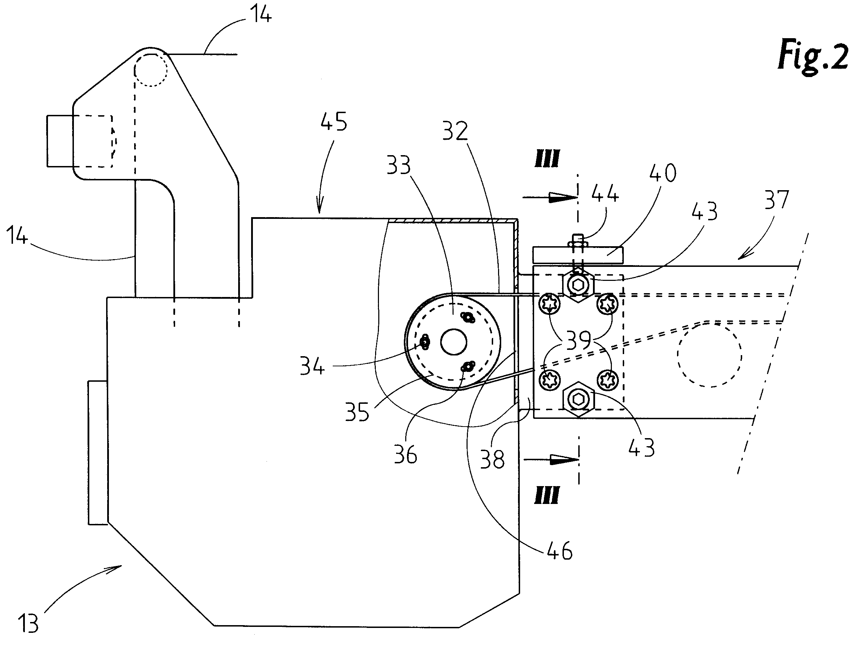

- Fig. 2: eine vereinfachte Darstellung einer Antriebseinrichtung für den Banderolenapparat gemäß Fig. 1,

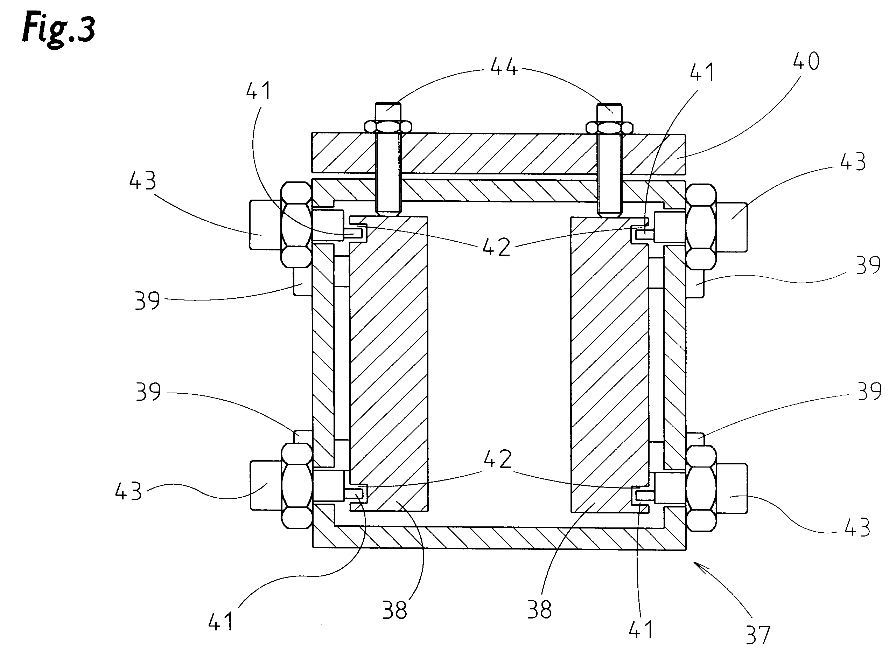

- Fig. 3: einen Vertikalschnitt zu der Antriebseinrichtung gemäß Fig. 2 in der Schnittebene III-III, bei vergrößertem Maßstab.

Die Ausführungsbeispiele der Zeichnungen sind ausgewählte, bevorzugte Fälle im Bereich einer Verpackungsmaschine für Zigarettenpackungen 10 des Typs Weichbecher. Diese Zigarettenpackung 10 ist üblicherweise mit einer Banderole 11 versehen, die sich quer über eine Stirnwand 12 der Zigarettenpackung 10 erstreckt. Die Banderolen 11 sind beispielsweise Steuerbanderolen aus Papier.

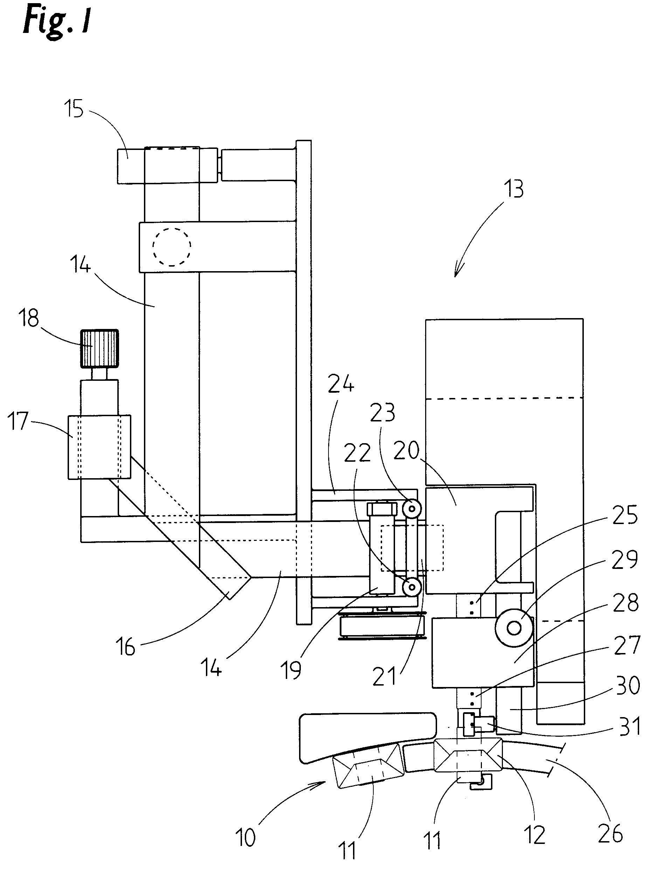

Die Banderolen 11 werden im Bereich eines in Fig. 1 gezeigten Banderolenapparats 13 gefertigt, vorbereitet und der Zigarettenpackung 10 zur Anbringung an der Stirnwand 12 zugeführt. Die Banderole 11 wird durch Abtrennen von einer Materialbahn 14 hergestellt. Die von einer Bobine (nicht gezeigt) abgezogene Materialbahn 14 wird über eine Umlenkrolle 15 in eine vertikale Ebene gelenkt. Danach wird die Materialbahn 14 durch ein schräggestelltes Umlenkorgan, nämlich durch einen Umlenkstab 16, um 90° umgelenkt.

Der Umlenkstab 16 ist ein Beispiel für ein verstellbares Organ. Zu diesem Zweck ist der Umlenkstab 16 an einer Justierhülse 17 angebracht, die durch eine Schraube, und zwar durch eine Rändelschraube 18, verstellbar ist. Im vorliegenden Falle sind Justierbewegungen in Aufwärts- und Abwärtsrichtung vorgesehen. Der Umlenkstab 16 ist unter einem Winkel von 45° positioniert. Die Verstellung bzw. Justierung des Umlenkstabs 16 ist ein technisch einfacher Stellvorgang, der von dem der Verpackungsmaschine ständig zugeordneten Maschinenführer ausgeführt werden kann. Die entsprechende (Stell-)Schraube ist deshalb als Rändelschraube 18 zur unmittelbaren, manuellen Bedienung ausgebildet.

Die Materialbahn 14 wird nachfolgenden Aggregaten durch angetriebene Vorschubwalzen 19 zugeführt. Diese drehen um aufrechte Achsen. An die Vorschubwalzen 19 schließt ein Messeraggregat 20 an, welches einen quer zur Materialbahn 14 verlaufenden Trennschnitt ausführt und dabei jeweils eine Banderole 11 von der Materialbahn abtrennt. In diesem Bereich ist eine Führung für die Materialbahn 14 angeordnet, die eine korrekte, wellenfreie Zuführung der Materialbahn 14 zum Messeraggregat 20 sicherstellt. Es handelt sich dabei um eine in aufrechter Ebene angeordnete Führungsplatte 21, an der die Materialbahn 14 entlanggleitet. Die Führungsplatte 21 ist durch Schrauben, und zwar ebenfalls durch Rändelschrauben 22, 23, an einem Träger befestigt, nämlich an einer Brücke 24.

Die Führungsplatte 21 muß von Zeit zu Zeit abgenommen und gereinigt werden von Rückständen, die aufgrund der gleitenden Führung der Materialbahn 14 entstehen. Diese Reinigungsarbeit gehört ebenfalls zu den technisch weniger aufwendigen Maßnahmen. Die Befestigungsschrauben sind demnach als Rändelschrauben 22, 23 ausgebildet zur unmittelbaren manuellen Betätigung.

Die von Materialbahn 14 nacheinander abgetrennten Banderolen 11 werden ohne Veränderung ihrer Position, also unter Beibehaltung der aufrechten Längserstreckung, durch einen Banderolenförderer 25 erfaßt und mit Abstand voneinander einem Faltrevolver 26 bzw. der Zigarettenpackung 13 zugeführt. Der Banderolenförderer 25 ist ein Saugförderer mit endlosem Saugband. An einem aufrechten Fördertrum 27 liegen die Banderolen 11 an.

Im Bereich des Fördertrums 27 wird das Saugband des Banderolenförderers 25 mit Unterdruck beaufschlagt, der die Banderolen 11 an der freien Seite des Saugbands bzw. des Fördertrums 27 hält.

Im Förderbereich der Banderolen 11 durch den Banderolenförderer 25 werden die Banderolen 11 auf der freien, vom Fördertrum 27 abliegenden Seite mit Leim versehen. Zu diesem Zweck ist im Bereich des Fördertrums 27 ein feststehendes Leimaggregat zum Aufbringen von vorzugsweise punktförmigen Leimbildern auf die Banderolen 11 angeordnet. Das Leimaggregat ist aus Gründen der Vereinfachung nicht dargestellt.

Um bei der Übertragung von Leim auf die Banderolen 11 freiwerdende Leimpartikel, Leimtropfen etc. aufzufangen, ist dem (nicht gezeigten) Leimaggregat eine Auffangschale 28 für Leim zugeordnet. Diese ist durch Schrauben, und zwar durch eine Rändelschraube 29, mit einem Traggestell 30 der Vorrichtung verbunden. Die Auffangschale 28 muß von Zeit zu Zeit abgenommen, entleert bzw. gereinigt werden. Auch dieser Vorgang beinhaltet eine technisch einfache Maßnahme. Die Befestigung der Auffangschale 28 erfolgt deshalb durch einfach zu bedienende Schrauben, nämlich insbesondere durch die gezeigte Rändelschraube 29 zur unmittelbaren manuellen Bedienung.

Die durch den Banderolenförderer 25 in den Bereich des Faltrevolvers 26 bzw. der Bewegungsbahn der Zigarettenpackungen 10 geförderten Banderolen 11 werden an die Zigarettenpackungen 10 durch einen gesonderten Förderer übergeben, nämlich durch eine Förderwalze 31. Diese transportiert die Banderole bis zur mittigen Positionierung derselben an der Stirnwand 12 der Zigarettenpackung 13.

Der Antrieb der Aggregate, beispielsweise des Messeraggregats 20, erfolgt durch einen Riementrieb, im vorliegenden Falle durch einen Zahnriemen 32. Dieser ist mit der eigentlichen Verpackungsmaschine verbunden bzw. wird durch diese (mittelbar) angetrieben. Der Antrieb des Zahnriemens 32 wird auf eine Umlenkscheibe 33 übertragen. Die Bewegungen des Banderolenapparats 13 müssen exakt auf den Maschinentakt abgestimmt sein. Die genaue Anpassung bzw. Nachstellung erfolgt über die Umlenkscheibe 33. Deren Relativstellung auf einer Welle muß deshalb exakt abgestimmt und unter Umständen nachjustiert werden. Die Umlenkscheibe 33 ist bei dem vorliegenden Beispiel mit Schrauben 34 an einer Tragscheibe 35 befestigt, die beispielsweise auf einer Welle angeordnet ist. Die Justierung der Umlenkscheibe 33 erfolgt durch Drehbewegungen relativ zur Tragscheibe 35. Um Stellbewegungen durchzuführen, sind in der Umlenkscheibe 33 Langlöcher 36 in Gestalt eines Kreissegments angeordnet. Durch Lösen der Schrauben 34 kann die Umlenkscheibe 33 relativ zur Tragscheibe 35 in Drehrichtung verstellt werden. Die Schrauben 34, im vorliegenden Falle drei in gleichen Abständen längs des Umfangs verteilte Schrauben 34, fixieren die Umlenkscheibe 33.

Einstellung und ggf. Verstellung der Umlenkscheibe 33 erfordert einen höheren technischen Aufwand. Um unerwünschte Betätigungen der Schrauben 34 zu vermeiden, sind diese in besonderer Weise ausgebildet, derart, daß ein spezielles bzw. standardmäßiges Bedienungswerkzeug eingesetzt werden muß. Im vorliegenden Falle sind die Schrauben 34 als Sechskant-Innenschrauben ausgebildet, die mit einem entsprechenden Werkzeug zu bedienen sind.

Das Aggregat, nämlich der Banderolenapparat 13, ist über eine Halterung mit dem Maschinengestell (nicht gezeigt) verbunden. Diese Halterung besteht im vorliegenden Falle aus einem länglichen, rohr- bzw. kanalförmigen Gehäuse 37. Am freien, offenen Ende ist der Banderolenapparat 13 verankert. Zu diesem Zweck sind zwei im Abstand voneinander angeordnete (horizontale) Haltelaschen 38 an dem Banderolenapparat angebracht, und zwar an einem Traggehäuse 45 desselben. Die Haltelaschen 38 treten in das freie Ende des Gehäuses 37 ein und sind dort verankert.

In dem Gehäuse 37 verläuft auch der Zahnriemen 32, der zu einem maschinenseitigen Antrieb führt. Das Traggehäuse 45 ist im Bereich zwischen den Haltelaschen 38 mit einer Durchtrittsöffnung 46 versehen, durch die der Zahnriemen 32 in das Traggehäuse zur Umlenkscheibe 33 gelangt.

In besonderer Weise ist die (lösbare) Verbindung zwischen dem Traggehäuse 45 bzw. den Haltelaschen 38 einerseits und dem Tragorgan, nämlich dem Gehäuse 37 andererseits ausgebildet. Die Relativstellung zwischen dem Gehäuse 37 einerseits und dem Banderolenapparat bzw. den starren Haltelaschen 38 andererseits ist einstellbar, und zwar die Winkelstellung des Gehäuses 37. Zu diesem Zweck sind einerseits Befestigungsschrauben und andererseits Stellschrauben vorgesehen. Das Gehäuse 37 ist durch mehrere Befestigungsschrauben 39 mit den Haltelaschen 38 verbunden. Im vorliegenden Falle sind aufrechte Seitenwände des Gehäuses 37 mit je vier Befestigungsschrauben 39 an den innenliegenden Haltelaschen 38 befestigt. Die Befestigungsschrauben 39 müssen gelöst werden, wenn das Gehäuse 37 von den Haltelaschen 38 abgenommen werden soll, aber auch bei Einstellung oder Veränderung der Relativstellung des Gehäuses. Es handelt sich demnach um funktionell wichtige Schrauben, die so ausgebildet sind, daß die Betätigung ein besonderes Werkzeug erfordert. Die Befestigungsschrauben 39 sind zu diesem Zweck mit einem Spezialkopf versehen, im vorliegenden Falle mit einem Vielzahnkopf (sogenannte Torx-Schraube), der ein besonderes Werkzeug erfordert.

Zur Veränderung der Relativstellung von Gehäuse 37 einerseits und Haltelaschen 38 andererseits der Höhe nach dienen zu beiden Seiten des Gehäuses 37 positionierte Stellschrauben 43. Jede aufrechte Seitenwand des Gehäuses 37 weist eine obere und eine untere Stellschraube 43 auf. An dem freien, inneren Ende der Stellschrauben ist jeweils ein Stift 41 angeordnet, der jeweils in eine zugeordnete Längsnut 42 der Haltelaschen 38 eintritt. Die Haltelaschen 38 sind auf der nach außen gerichteten Seite mit je zwei parallelen Längsnuten 42 im oberen und unteren Bereich versehen. Die Stifte 41 sind exzentrisch, also außermittig, an den Schrauben 43 angeordnet. Ein Verdrehen der Stellschraube 43 führt deshalb zu einer Auf- oder Abbewegung des betreffenden Stifts 41 und damit zu einer Veränderung der Relativstellung. Die Stellschrauben 43 sind im Bereich eines Schraubenkopfes als Sechskant-Innenschrauben ausgebildet, können also mit entsprechenden (Standard-)Werkzeugen betätigt werden, um eine Veränderung der Relativstellung, insbesondere der Neigung des Gehäuses 37 gegenüber den Haltelaschen 38 zu bewirken.

Eine ähnliche Funktion haben Anschlagschrauben 44, die im Bereich einer oberen Querwandung des Gehäuses 37 angeordnet sind und durch dieses hindurchtreten. Die an einer Platte 40 außerhalb des Gehäuses 37 angeordneten Anschlagschrauben 44 stützen sich mit dem innenliegenden Ende auf der Oberseite der Haltelaschen 38 ab und bestimmen damit die Relativstellung zwischen Gehäuse 37 und Haltelaschen 38. Auch die Anschlagschrauben 44 sind mit einem besonderen Schraubenkopf versehen, nämlich mit einem Sechskant-Innenkopf. Die komplexe Einstellung der exakten Position des Gehäuses 37 wird durch die Stellschrauben 43 einerseits und durch die Anschlagschrauben 44 andererseits bewirkt.

Von Zeit zu Zeit ist es erforderlich, das an der Halterung angebrachte Aggregat, nämlich den Banderolenapparat 13 vom Gehäuse 37 abzunehmen und gegen einen anderen Banderolenapparat auszutauschen. Hierfür sind lediglich die Befestigungsschrauben 39 zu lösen. Die Haltelaschen 38 können dann aus dem Gehäuse 37 herausgezogen und damit kann der Banderolenapparat 13 von der Halterung abgenommen werden. Dabei treten die Stifte 41 an den offenen Enden aus den Längsnuten 42 heraus. Bei Montage eines (neuen) Banderolenapparats 13 werden die Haltelaschen 38 in das freie Ende des Trägers, nämlich des Gehäuses 37 eingeschoben, wobei die Stifte 41 in die Längsnuten 42 eintreten. Dabei ist von Bedeutung, daß bei dem Auswechseln des Aggregats die für die exakte Relativstellung desselben erforderlichen Justierorgane nicht verändert werden. Der neu angesetzte Banderolenapparat 13 erhält die exakt eingestellte Relativstellung am Gehäuse 37, da die Justierorgane, nämlich die Stellschrauben 43 und die Anschlagschrauben 44, nicht verändert wurden und nicht verändert werden konnten.

Eine weitere Besonderheit besteht in einer Maßnahme, durch die ein Vertauschen von Schrauben gleicher Größe verhindert wird. Es besteht die Gefahr, daß beispielsweise versehentlich andere Befestigungsschrauben 39 verwendet werden. Dieser Gefahr wird durch die Verwendung von Schrauben mit unterschiedlich gestaltetem oder bemessenem Gewinde entgegengewirkt. Beispielsweise können die Schrauben einer Gruppe ein metrisches ISO-Gewinde besitzen, während das Gewinde der Schrauben einer anderen Gruppe als metrisches ISO-Feingewinde ausgeführt ist. Weitere Gewindeformen zur Unterscheidung der Gruppenzugehörigkeit sind Whitworth-Gewinde, metrische Iso-Trapezgewinde usw.

Weiterhin können die Schrauben der unterschiedlichen Gruppen unterschiedlich farblich gekennzeichnet sein.

### Bezugszeichenliste:

- 10: Zigarettenpackung
- 11: Banderole
- 12: Stirnwand
- 13: Banderolenapparat
- 14: Materialbahn
- 15: Umlenkrolle
- 16: Umlenkstab
- 11: Justierhülse
- 18: Rändelschraube
- 19: Vorschubwalze
- 20: Messeraggregat
- 21: Führungsplatte
- 22: Rändelschraube
- 23: Rändelschraube
- 24: Brücke
- 25: Banderolenförderer
- 26: Faltrevolver
- 27: Fördertrum
- 28: Auffangschale
- 29: Rändelschraube
- 30: Traggestell
- 31: Förderwalze
- 32: Zahnriemen
- 33: Umlenkscheibe
- 34: Schraube
- 35: Tragscheibe
- 36: Langloch
- 37: Gehäuse
- 38: Haltelasche
- 39: Befestigungsschraube
- 40: Platte
- 41: Stift
- 42: Längsnut
- 43: Stellschraube
- 44: Anschlagschraube
- 45: Traggehäuse
- 46: Durchtrittsöffnung

## Patentansprüche

1. Maschine, insbesondere Verpackungsmaschine, mit durch Schrauben befestigten oder verstellbaren Maschinenelementen, Baugruppen, Aggregaten, Einheiten oder Organen, **dadurch gekennzeichnet,** daß Schrauben einer ersten Gruppe mit gleicher Funktion oder Wartungsstufe eine übereinstimmende Form aufweisen und Schrauben mindestens einer zweiten Gruppe mit abweichender Funktion oder Wartungsstufe ebenfalls eine übereinstimmende, jedoch andere Form aufweisen als die Schrauben der ersten Gruppe, insbesondere derart, daß die Schrauben der zweiten Gruppe nicht mit Betätigungsmitteln für Schrauben der ersten Gruppe betätigbar sind.

2. Maschine nach Anspruch 1, **dadurch gekennzeichnet,** daß Schrauben unterschiedlicher Gruppen unterschiedlich ausgebildete, jedoch innerhalb der Gruppe übereinstimmende Schraubenköpfe aufweisen.

3. Maschine nach Anspruch 1 oder 2, **dadurch gekennzeichnet,** daß die Schrauben unterschiedlicher Gruppen unterschiedliche Gewindeformen aufweisen, insbesondere Befestigungsschrauben für abnehmbare bzw. austauschbare Aggregate ein vom Normgewinde abweichendes (Fein-)Gewinde.

4. Maschine nach Anspruch 1 oder einem der weiteren Ansprüche, **dadurch gekennzeichnet,** daß Schrauben für die Durchführung technisch einfacher Maßnahmen, insbesondere Stellschrauben einfacherer Organe oder Befestigungsschrauben für die Abnahme und Wiederbefestigung von einzelnen Organen, zur manuellen Betätigung ohne Werkzeuge ausgebildet sind, insbesondere als Rändelschrauben (18, 29).

5. Maschine nach Anspruch 1 oder einem der weiteren Ansprüche, **dadurch gekennzeichnet,** daß Schrauben einer anderen Gruppe ausschließlich mit herkömmlichen Betätigungswerkzeugen, insbesondere einem Maulschlüssel oder einem Imbusschlüssel, betätigbare Schraubenköpfe aufweisen.

6. Maschine nach Anspruch 1 oder einem der weiteren Ansprüche, **dadurch gekennzeichnet,** daß Schrauben einer Gruppe für komplexe bzw. technisch schwierige Verbindungen oder Justierungen, insbesondere Befestigungsschrauben für abnehmbare Aggregate, mit Spezialwerkzeugen zu betätigende Schraubenköpfe aufweisen, zum Beispiel als Vielzahnschraube (sogenannte Torx-Schraube) ausgebildet sind.
